# EUROPEAN PATENT SPECIFICATION

(11) **EP 4 057 821 B1**
(45) Date of publication and mention of the grant of the patent: **14.10.2026**
(21) Application number: 20796686.2
(22) Date of filing: 29.09.2020
(51) Int. Cl.: A21B 3/13, F24C 15/16

(54) **BAKING TRAY OR BAKING GRID HAVING A NON-STICK AND/OR NON-WETTING COATING, COOKING APPLIANCE COMPRISING SUCH A BAKING TRAY OR BAKING GRID AND METHOD FOR MANUFACTURING A BAKING TRAY OR BAKING GRID**
BACKBLECH ODER BACKROST MIT EINER ANTIHAFT- UND/ODER NICHT-BENETZENDEN BESCHICHTUNG, KOCHGERÄT MIT EINEM SOLCHEN BACKBLECH ODER BACKROST UND VERFAHREN ZUR HERSTELLUNG EINES BACKBLECHES ODER BACKROSTES
PLAQUE OU GRILLE DE CUISSON AYANT UN REVÊTEMENT ANTIADHESIF ET/OU NON MOUILLANT, APPAREIL DE CUISSON COMPRENANT UNE TELLE PLAQUE OU GRILLE DE CUISSON ET PROCÉDÉ DE FABRICATION D'UNE PLAQUE OU GRILLE DE CUISSON

(30) Priority: 15.11.2019 EP 19209417; 07.04.2020 WO PCT/CN2020/083446
(43) Date of publication of application: 21.09.2022
(73) Proprietor: ELECTROLUX APPLIANCES AKTIEBOLAG, 105 45 Stockholm (SE)
(72) Inventor: SCHÜTZ, Tobias, 91541 Rothenburg ob der Tauber (DE); TISSELLI, Filippo, 47122 Forli (IT); WÄLZLEIN, Klaus, 91541 Rothenburg ob der Tauber (DE)
(74) Representative: Electrolux Group Patents
(86) International application number: PCT/EP2020/077245
(87) International publication number: WO 2021/094032

(56) References cited:
- EP-A1- 2 177 580
- WO-A1-2004/087223
- WO-A1-2011/056742
- JP-A- 2014 148 704
- JP-A- H0 523 253
- US-A1- 2004 105 985
- US-A1- 2015 144 613

## Description

This application claims priority benefit to European patent application No. EP19209417.5, filed on November 15, 2019, and International patent application No. PCT/CN2020/083446, filed on April 07, 2020, the disclosures of which are hereby incorporated by reference herein in their entirety.

### TECHNICAL FIELD

The present invention relates to a baking tray or baking grid having a non-stick and/or non-wetting coating. In particular, the present invention relates to a baking tray or baking grid of a cooking appliance. Further, the present invention relates to a cooking appliance having such a baking tray or baking grid. Moreover, the present invention relates to a method for manufacturing a baking tray or baking grid, in particular a baking tray or baking grid of a cooking appliance, wherein the non-stick and/or non-wetting coating is applied to the baking tray or baking grid.

### BACKGROUND

One problem for the customer is the cleaning of an oven and used components such as baking trays or baking grid after usage, especially after food items, such as cheese, sauces, oils, fat or the like, are burned onto the surface of the cavity, further components within the cavity or in particular insertable components like baking trays or baking grids that are in direct contact with the foodstuff during the cooking process. In particular such baking trays or baking grids are often dirty over large areas and therefore time-consuming to clean. Furthermore cleaning of baking trays or baking grids should be carried out each time when they have been used.

Baking trays or baking grids cannot be cleaned along with the cooking appliance and the cavity within so-called self-cleaning appliances with pyrolysis functionality, appliances with catalytic enamel or appliances with plasma treatment or steam-cleaning program but have to be removed from the oven cavity before starting such cleaning procedures. Therefore, baking trays or baking grids have to be cleaned separately by hand or by use of a dishwasher and it is desirable to facilitate said cleaning.

US-A-2004105985 discloses an apparatus having an easily cleared surface by providing for a hydrophobic surface coating.

### SUMMARY

It is an object of the present invention to provide a baking tray or baking grid, a cooking appliance comprising such a baking tray or baking grid and a method for manufacturing such a baking tray or baking grid, having improved properties, in particular with regard to cleaning behaviour, temperature resistance and/or surface hardness.

These and other problems are solved by the subject matter of the attached independent claims.

The first object of the present invention is achieved by a baking tray or baking grid (or: cooking good carrier) according to claim 1.

A baking tray or baking grid, in particular a baking tray or baking grid for a cooking appliance, having a non-stick and/or non-wetting coating on a surface is obtainable by (or: prepared by) a process characterised by the following steps:
a) providing an uncoated baking tray or baking grid, in particular an essentially plate-shaped baking tray, having surface, in particular an upper surface and a bottom surface,
b) pretreating the upper and/or bottom surface of the uncoated baking tray or the surface of the uncoated baking grid at least partially, in particular completely, for providing a surface having a roughness being suitable for applying a non-stick and/or non-wetting coating, by mechanical treatment, physical treatment or chemical treatment, in particular by sandblasting and/or laser treatment and/or an enamelling process to form a ground layer, thus applying an enamel layer onto the surface of the baking tray or the baking grid,
c) applying the non-stick and/or non-wetting coating, directly or indirectly, to the pretreated surface of the baking tray or baking grid or the surface of the ground layer, wherein the non-stick and/or non-wetting coating comprises at least one layer that is obtained by a sol-gel process from a first composition comprising a silica sol and a silane.

In other words: The non-stick and/or non-wetting coating is a sol-gel coating. The at least one layer, hereinafter also referred to as base layer, is composed of a matrix comprising the condensation reaction product of a silica sol and a silane. Obtained by a sol-gel process from a first composition has therefore to be understood in such a way, that the first layer is obtained by means of hydrolysis and (poly-)condensation of an aqueous mixture comprising at least a silica sol and a silane. Thus, the starting materials of the first composition, namely at least silica sol, silane and water if needed, are mixed together and stirred. The mixture obtained thereof is then applied to the upper surface of the baking tray and dried to obtain the first layer. Such a coating having one layer is known for example from EP 2 177 580 B1.

The expression "non-stick" indicates a surface that resists adherence of food items, such as cheese, sauces, oils, fat or the like, what permits easy cleaning of the baking tray or baking grid. The expression "non-wetting" terms a surface that repels liquids, e.g. water. The property is evidenced by a large contact angle between a drop of water and the surface on which the drop rests, wherein a contact angle of at least 95 degree is desirable.

According to the present invention, however, the "upper surface" of baking tray or baking grid is the surface on which the foodstuff is placed and that is - once inserted into the cooking chamber - directed to an upper cavity wall of a cooking appliance. Accordingly, a "bottom surface" of a baking tray or baking grid is the surface facing away from the foodstuff and towards a bottom cavity wall of the cooking appliance. In particular, at least the upper surface and thus the surface that is in contact with foodstuff is provided with an non-stick and/or non-wetting coating, but even applying such a coating on the bottom surface and therefore on the entire surface of the baking tray or grid might be advantageous, for example, in the case of more than one baking tray is used within the cooking appliance at the same time so that food items from a "lower" baking tray might splash up.

According to the present invention, however, the expression "baking tray or baking grid" shall be largely understood as a cooking good carrier and shall cover all known forms and shapes of trays, grids, air fry grids or frying pans and the like that are well-known on the market, with or without any openings and different possibilities for mounting said baking tray or baking grid to a cooking appliance. For reasons of clarity, we mainly refer to baking trays in the following but the explanations apply in the same way to other types of cooking good carriers as mentioned before.

The idea of the present invention is to provide a baking tray or baking grid with an easy to clean effect whereby the contact angle of the surface shows more than 95 degrees. Applying a non-stick and non-wetting coating by a sol-gel process has the advantage that a burning process at high temperatures for applying a non-stick coating on the baking tray is not required what saves energy. Besides a good cleaning behaviour, said coating shows good abrasion-resistant and a great surface hardness what leads to an increased lifetime.

The adhesion of the non-stick and/or non-wetting coating to the surface of the baking tray may particularly depend on the surface roughness. The present inventors have surprisingly found that such pretreatment of the surface before applying the non-stick and/or non-wetting coating and particularly a roughening of the surface is advantageous for the adhesion properties of the non-stick and/or non-wetting coating. Without such pretreatment, particularly such roughening, the at least one layer, and any subsequent layer, of the non-stick and/or non-wetting coating may peel off. Therefore, an advantageous surface structure may reduce the risk of peel off of the non-stick and/or non-wetting coating and at the same time allow to reduce the amount of coating and thus decrease costs. However, a surface roughness, which is too high, may also be disadvantageous, as the adhesion of the coating may be not optimal and/or the amount of coating needed will be higher than necessary.

A pretreatment of the surface by laser may be particularly advantages in comparison to known sandblasting methods in that integration into other production equipment is possible, for example related to existing laser welding lines in oven cavities, where sandblasting equipment may need totally new equipment and specific housings, protections, or the like. Furthermore it is also advantageous in having no need of process material, like corundum powder usually applied in sandblasting. Furthermore, it is also advantageous in reducing dirt occurring during the treatment and further surface cleaning after pretreatment steps and/or before coating is advantageously reduced compared to standard sandblasting methods. Also reproducibility of surface parameter values are advantageously increased.

The person skilled in the art will recognize that various laser methods and laser equipment may be applied to achieve the described preferably surface roughness. By way of example, in a pretreatment step according to the present invention a laser of type CL100 can be applied with a focal width of 254 mm, a wave length of 1064 nm, and an optical system STAMP10 with suction removal. Thereby, the surface treatment speed may be adjusted according to the desired results and with methods well known to the person skilled in the art. For example such surface treatment speed may be approximately 10m²/sec or higher.

According to the invention, the surface of the baking tray might be at least partially, in particular completely, roughened and/or protected against corrosion by applying a ground layer by an enamelling process, thus by applying an enamel layer to the surface. The enamelling process in particular comprises applying an enamel powder onto the surface of the baking tray and heating the enamel powder for providing a ground layer with a surface having a roughness being suitable for applying the non-stick and/or non-wetting coating and/or being corrosion resistant. Such a ground layer is useful for all base materials in order to prepare the baking tray for subsequent coating, thus for providing a good wettability and clean surface to obtain good adhesion performances on the full surface and to avoid detachment of the non-stick and/or non-wetting coating.

Furthermore, said ground layer may provide corrosion resistance for the surface of the baking tray so that it also functions as a protective layer, in case of a baking tray made of a non-corrosive material itself. Therefore roughening the surface of the baking tray by an enamelling process is advantageous with regard to mechanical treatment like sandblasting or by laser treatment as just one single process step has to be carried out in order to form a surface that has a good roughness and is in particular additionally non-corrosive in comparison to apply a protective layer in a first step and to roughen the surface of the protective layer in a second step.

The baking tray can be made of different materials, the material being suitable for intended use, such as stainless steel or another material that is non-corrosive itself, for example aluminium or an aluminium alloy. The disadvantage of such baking trays is, however, that they are expensive. Therefore, in a preferred alternative, the baking tray is made of corrosive steel, particularly so-called low-carbon steel is a preferred material. An example for such commonly used low carbon steel typically contains a small percentage of carbon, approximately about 0.05 to 0.30% carbon.

In case of a baking tray made of corrosive material, the baking tray is according to the invention provided with (or: comprises) a protective layer (or: non-corrosive layer) that is applied to the surface of the baking tray at least partially, in particular completely, and wherein said protective layer is pretreated by sandblasting and/or laser treatment and/or an enamelling process, thus applying an enamel layer for providing a surface having a roughness being suitable for applying the non-stick and/or non-wetting coating and applying the at least one layer of the non-stick and/or non-wetting coating to said protective layer. For example, the surface of the baking tray is coated with such a protective layer by spray-painting.

This is due to the reason, that the non-stick and/or non-wetting coating itself does not protect the base material or substrate, thus the baking tray, from corrosion. Therefore, an additional corrosion protection layer is advantageous if the baking tray is made of any corrosive material so that the non-stick and/or non-wetting coating can also be used with base material or substrate that is corrosive itself. In case the base material is non-corrosive itself, thus the baking tray is manufactured from stainless steel or another non-corrosive material, the step of applying a protective layer for corrosion protection may be optional.

According to preferred embodiments, said protective layer is an enamel layer and/or an aluminium layer and/or a layer comprising aluminium.

Preferably the protective layer has a thickness between 50 and 250µm, in particular between 100 and 200µm.

The protective layer and/or the ground layer might be made of a so-called pyro or vitreous enamel that essentially consists of melted and fused glass powder. For applying said enamel layer to the baking tray, high burning temperatures from about 820 to 840°C are needed.

Another kind of protective layer and/or ground layer might be made of an enamel having a low softening point between 450°C and 560°C, respectively a low glass transition temperature, a so-called "low-temperature enamel". The softening point is defined as a temperature, respectively a temperature range, at which the material, e.g. the enamel turns from its hard and relatively brittle state into a molten or rubber-like state when temperature is increased. Therefore, said low-temperature enamel can be applied to the surface of the baking tray at lower burning temperatures. Said enamel is for example an aluminium enamel that comprises aluminium oxide.

Compositions of such conventional enamels are known for example from WO 02/02471 A1 or GB 718,132. WO 02/02471 A1 discloses an enamel composition for use in forming an enamel cover coat comprising a glass component comprising at least a first glass frit, comprising by weight from about 30% to about 45%P₂0₅, from about 20% to about 40% A1₂0₃ from about 15% to about 35% Li₂0 and Na₂0 and K₂0, up to about 15% B₂0₃, up to about 15% MgO and CaO and SrO and BaO and ZnO, up to about 10% Ti0₂ and Zr0₂, and up to about 10% Si0₂. The glass component may also comprise a blend of at least a first glass frit and a second glass frit. GB 718,132 discloses alkali metal aluminium phosphate vitreous enamel frits.

Another kind of protective layer and/or ground layer might be made of a catalytic enamel, for example known from EP 0 565 941 A1, disclosing a catalytically active coating composition comprising an enamel frit, e.g. containing SiO₂, B₂O₃, TiO₂, ZrO₂, P₂O₅, Fe₂O₃, Al₂O₃, alkali metal oxides and alkaline earth metal oxides. The coating further comprises inert substances such as, for example, quartz, feldspar or alumina ared used and a plate-shaped substrate coated with one or more metal oxides as an oxidation catalyst. Another catalytic enamel is known for example from GB 1 418 842 disclosing a catalytically active enamel layer for a cooking appliances, wherein an oxide and/or mixed oxide of natural origin containing iron oxide and/or titanium oxide is added to an enamel frit containing typical silicates and oxides.

Furthermore, so-called ground coat compositions comprising generally a glassy component and an additive component might be used for forming the protective layer and/or the ground layer an providing the effect of a rough and binding surface. Such ground coats are for example described in US 8,778,455 B2 and comprise a combination of one or more alkali oxides, such as Na₂O or Ka₂O, one or more alkaline earth oxides, such as ZnO or BaO, and one or more various transition metal oxides, such as Al₂O₃, SiO₂, TiO₂, ZrO₂, P₂O₅ or Co₂O₃, as glassy component, and additive such as fluorine or NO₂.

According to a preferred embodiment, the ground layer, in particular the enamel layer obtainable by the enamelling process, has a layer thickness between 5 and 100µm, in particular between 10 and 80µm, more particularly between 20 and 50µm. Typical enamel thickness is normally larger than 100µm. Inventors have surprisingly found, that the enamel compositions mentioned above allow forming of the upper layers being thinner than before. Such thin layers further establish an improved heat transfer between the baking tray and the foodstuff.

For providing good adhesion properties of the non-stick and/or non-wetting coating, the surface is pretreated to provide a surface that has roughness being suitable for applying the non-stick and/or non-wetting coating. In a preferred embodiment a surface roughness of a surface of the baking tray and/or a surface of the ground layer and/or a surface of the protective layer achieved with such pretreatment step is between Ra 0.01 µm to 10.00 µm, more preferably between Ra 0.10 µm to 5.00 µm, still more preferably between Ra 0.20 µm to 5.00 µm, still more preferably between Ra 0.50 µm to 5.00 µm, still more preferably between Ra 2.00 µm to 5.00 µm, still more preferably between Ra 2.50 µm to 5.00 µm.

The present inventors have surprisingly found that such an advantageous roughness within the above limits further improves the adhesion of subsequent layers or of a first or any subsequent layers of the non-stick and/or non-wetting coating to the baking tray or the protective layer and/or the ground layer to reduce the risk of peel off of the coating and at the same time reduce costs as the amount of coating is reduced in a favorite manner.

In summary, a surface having such a good roughness can be obtained in particular by applying a ground layer of known enamels as mentioned before. Even mechanical, physical or chemical treatment, in particular laser treatment of the surface can be carried out to achieve required roughness.

A lower surface roughness - within the limits above mentioned - may be advantageous as the amount of non-stick and/or non-wetting coating can be reduced.

Preferably, a surface roughness is less than Ra 10.00 µm, preferably less than Ra 7.50 µm, more preferably less then Ra 5.00 µm.

A higher surface roughness - within the limits mentioned above - may be advantageous as this would improve adhesive capacity for the non-stick and/or non-wetting coating.

Preferably, a surface roughness is more than Ra 0.01 µm, preferably more than Ra 0.10 µm, more preferably more than Ra 0.20 µm, still more preferably more than Ra 0.50 µm, still more preferably more than Ra 1.00 µm, still more preferably more than Ra 2.00 µm.

The person skilled in the art knows various standard methods to determine the surface roughness value Ra. Particularly the surface roughness may be preferably determined in accordance with BS EN ISO 4287:2000 British standard, identical with the ISO 4287:1997 standard.

In a preferred embodiment, the ceramic non-stick and/or non-wetting coating comprises at least a first and a second layer, wherein the first layer is applied to the pretreated surface of the baking tray or the surface of the ground layer or the pre-treated surface of the protective layer, and wherein the second layer is applied to the first layer, so that a baking tray comprising a coating having base layer and top layer is obtained.

Particularly, the second layer is obtained by a sol-gel process from a second composition comprising a silica sol, a silane and a siloxane, in particular a polydimethylsiloxane. Such a coating having at least a second layer is also known from EP 2 177 580 B1.

In other words: The second layer, hereinafter also referred to as top layer, is composed of a matrix comprising the condensation reaction product of a silica sol, a silane and a siloxane. Obtained by a sol-gel process from a second composition has therefore to be understood in such a way, that the second layer is obtained by means of hydrolysis and (poly-)condensation of an aqueous mixture comprising at least a silica sol, a silane and a siloxane. Thus, the starting materials of the second composition, namely at least silica sol, silane, siloxane and water if needed, are mixed together and stirred. The mixture obtained thereof is then applied to the upper surface of the first layer and dried to obtain the second layer.

Preferably, the silica sol is present in an amount of 15 to 70wt%, in particular in an amount of 30 to 70wt% and/or the silane is present in an amount of 2 to 70wt%, in particular in an amount of 10 to 40wt%, both in the first and/or the second composition and/or in the first and/or second layer.

In particular the silane in the first and/or the second composition and/or in the first and/or second layer is an organoalkoxysilane, in particular a methyltrimethyoxysilane and/or a fluoralkoxysilane.

The first and/or the second composition and/or in the first and/or second layer may comprise a catalyst, in particular an acidic catalyst, more preferably an organic compound containing one or more carboxyl groups and/or a mineral acid, e.g. hydrochloric acid, sulfuric acid or nitric acid. Different monocarboxylic or dicarboxylic acids like formic acid, acetic acid or oxalic acid may be mentioned here as an example for suitable catalysts.

It has been shown, that it is advantageous, if the catalyst is present in an amount of 0,1 to 5 wt%, in particular in an amount of 0,1 to 2 wt%, both in the first and the second composition and/or in the first and/or second layer. The catalyst generally acts as a catalyst in the hydrolysis and condensation reaction and prevents too slow crosslinking.

In another preferred embodiment, the first and/or the second composition and/or in the first and/or second layer comprise or comprises a solvent, in particular an organic solvent. Examples for organic solvents are alcoholic solvents, for example methanol, ethanol or propanol.

In particular, the solvent is present in an amount of 10 to 60wt%, in particular in an amount of 10 to 40wt%.

Like the second composition or second layer, the first composition or first layer may also comprise a siloxane in a preferred embodiment. Said siloxane is in particular a polydimethylsiloxane.

An advantageous amount of siloxane in the first composition or first layer as well as in the second composition or second layer is between 0,1 to 2 wt%.

In a preferred embodiment, the first composition or first layer and/or the second composition or second layer comprise or comprises pigments and/or dyes and/or filling materials and/or further additives. In particular, temperature resistant anorganic pigments are favourable.

In addition, water is added to the first composition and/or the second composition, if needed.

Besides mechanical functionality and easy-to-clean behaviour, baking trays or grids may also be provided with specific printing for applying product name and/or symbols. Is is desirable to apply such printings without need of removal of the coating in the areas of the printing and without worsen the cleanability of the baking tray. According to a preferred embodiment, the baking tray or baking grid comprises such a printing, wherein at least a part of an outer surface of the coating provides an activated surface area, in particular being activated by an activation process that increases the surface tension within the activated surface area compared to the remaining outer surface of the coating before the activation process or parts of the outer surface that are not activated. Said activation process is in particular activated by an activation process using plasma technology. The printing (or printing material) is then applied to the activated surface area, thus on those parts of the outer surface of the coating for or on which the activation process has been carried out. Application of the printing is in particular carried out by means of ink technology, such as serigraphy or tampography.

Thereby the baking tray comprises a printing, but still shows good cleaning behaviour. Performing the preliminary activation process on the coating increases locally the surface tension so that the coating shows good adhesion properties in said activated areas for subsequent applying of the printing. Said activation lasts for some days, allowing a convenient application of symbols or the like, in particular by using traditional ink technologies. As the printing is applied to the coating without need of removing parts of said coating, e.g. by laser treatment before, additionally corrosion issues are avoided.

A preferred embodiment is characterized by an activation process which is performed using plasma technology. Particularly, a plasma technology gun or pin is used, moving on or above the part of the exposed surface of the coating to be treated and performing the activation process passing over said area. The coating is essentially non polar and shows non-wetting properties. Due to the activation process within the plasma, polar groups are formed at the exposed surface of the coating that increase the wettability of its surface. Subsequently, the printing can adhere to the surface.

In order to perform a quick and cost-efficient treatment, the activation process may be performed by limiting to the area or areas receiving a printing. Hence, areas without any printing may be excluded from such treatment. In order to reach this target, the exposed surface of the coating is covered at least partially, thus blank or non-printed areas are covered before performing the activation process in order to limit the part of the exposed surface on which the activation process is performed, in particular by covering parts of the exposed surface by means of respective cover elements or cover means. Alternatively, the plasma technology gun or pin may be deactivated when passing over the blank or non-printed areas.

The second object of the present invention is achieved by a cooking appliance according to claim 16.

Such a cooking appliance comprises a heatable cavity (or: oven muffle) comprising at least one cavity wall (or: muffle wall) defining a cooking chamber for cooking foodstuff, a central opening for placing foodstuff into the cooking chamber, heating elements for heating said cavity, and a door for closing the cavity, in particular for closing the central opening of the cavity, and mounting grids and/or shelves being disposed at a left and a right cavity wall for positioning a baking tray or baking grid within the cooking chamber. The cooking appliance further comprises a baking tray according to the present invention that is mounted or can be mounted on mounting grids and/or shelves.

For example, a cooking appliance according to the present invention is a cooking and/or baking device for cooking and/or baking of foodstuff. Such cooking appliance, preferably a cooking and/or baking device, may particularly be a cooking appliance selected from the group comprising an oven, baking oven, microwave, steam-oven and steam-cooker.

The cooking appliance may comprise further technical components like a fan and/or components that are provided to be attached to the cavity walls, for example a fan cover. Even these further components may have a comparable structure to the baking tray, thus at least one surface of such accessory components may be pretreated by one of the methods mentioned above and coated with a ceramic non-stick and/or non-wetting coating comprising at least a first layer, wherein the first layer is obtained by a sol-gel process from a first composition comprising a silica sol and silane.

The components of the cavity, thus the cavity walls and/or further accessory components, may be integrally formed or may comprise several parts that are provided to be joined together to form a shaped structure, such as the heatable oven cavity, its frontframe or any component thereof.

Heating elements, e.g. tube heating elements or grill elements, can heat up the cavity upper surface up to 500°C. For the use of a non-stick and non-wetting coating, in particular a coating obtained by a sol-gel process being described herein, that is easy to clean, the maximum temperature needs to be below about 300 to 350°C.

The third object of the present invention is achieved by a method for manufacturing a baking tray or baking grid according to claim 17.

Such a method for manufacturing a baking tray having a non-stick and/or non-wetting coating on its surface comprises at least the following steps:
Firstly, an uncoated baking tray or baking grid having a surface, in particular having an upper surface and a bottom surface is provided.
Secondly, the surface of the baking tray or baking grid is at least partially, in particular completely pretreated by mechanical treatment, physical treatment or chemical treatment, in particular by sandblasting and/or laser treatment and/or an enamelling process to form a ground layer to provide a surface having a roughness being suitable for applying a non-stick and/or non-wetting coating.

In other words: Before applying the non-stick and/or non-wetting coating and a protective layer to the baking tray, the surface of the uncoated baking tray on which the non-stick and/or non-wetting coating and or the protective layer has to be applied is prepared, e.g. by cleaning and/or drying the surface of the baking tray and/or activating the surface, preferably by roughening the surface by sandblasting and/or laser treatment and/or an enamelling process to form a ground layer on the surface of the baking tray, in order to achieve better adhesion of the protective layer and the non-stick and/or non-wetting coating.

Regarding the pretreatment and roughening of the surface, we explicitly refer to the explanations and examples described with regard to the different methods and materials used for the different layers, in particular the different enamel compositions, described in the context of the protective and/or ground layer as well as composition of the non-stick and/or non-wetting coating described in the context of the baking tray.

Thirdly, at least one layer of the non-stick and/or non-wetting coating is applied to the pretreated surface of the baking tray or the surface of the ground layer.

According to a preferred embodiment, during the enameling process of the pretreatment, an enamel powder is applied onto the surface of the baking tray at least partially, in particular completely, and the enamel powder is heated for providing a ground layer with an upper surface having a roughness being suitable for applying the non-stick and/or non-wetting coating.

According to the invention, a protective layer, in particular an enamel layer and/or an aluminium layer and/or a layer comprising aluminium, is applied to the surface of the baking tray and the protective layer is pretreated by sandblasting and/or laser treatment and/or an enamelling process to form a ground layer.

In other words: Before applying the non-stick and/or non-wetting coating to the surface of the protective layer, the surface of the protective layer is prepared, e.g. by cleaning and/or drying the surface and/or activating the surface, preferably by roughening the surface for example by mechanical treatment, in particular sandblasting, laser treatment or chemical treatment of the surface of the baking tray, in order to achieve better adhesion of the non-stick and/or non-wetting coating. Also preferred is even here, that the surface of the protective layer is made and/or roughened by an enameling process, in particular by applying a ground layer.

Thus the ground layer is applied to at least the upper surface of the baking tray by an enamelling process having a surface roughness between Ra 0.01 µm to 10.00 µm, more preferably between Ra 0.10 µm to 5.00 µm, still more preferably between Ra 0.20 µm to 5.00 µm, still more preferably between Ra 0.50 µm to 5.00 µm, still more preferably between Ra 2.00 µm to 5.00 µm, still more preferably between Ra 2.50 µm to 5.00 µm and/or a layer thickness between 5 and 100µm, in particular between 10 and 80µm, more particularly between 20 and 50µm. Said properties can be achieved by using enamel compositions described before, thus conventional enamels, catalytic enamels or so-called ground compositions. We refer explicitly to the explanations and examples described in the context of the protective and ground layer of the baking tray.

In a preferred embodiment, the non-stick and/or non-wetting coating comprises a first and a second layer, wherein the first layer is applied to the surface of the baking tray or the surface of the ground layer or the pretreated surface of the protective layer, and wherein the second layer is applied to the first layer, so that a baking tray comprising a coating having base layer and top layer is obtained.

In order to apply a printing on the coated surface, according to a preferred embodiment, the method may comprise additionally the steps performing an activation process on at least a part of the outer surface of the coating in order to provide an activated surface area, wherein the activation process in particular increases the surface tension within the activated surface area, in particular performing an activation process by using plasma technology, and applying a printing to the activated surface area, in particular by means of ink technology.

Novel and inventive features of the present invention are set forth in the appended claims.

### BRIEF DESCRIPTION OF THE DRAWINGS

The present invention will be described in further detail with reference to the drawings, in which
- FIG 1: illustrates a schematic view of a cooking appliance including a baking tray according to an embodiment of the present invention,
- FIG 2: illustrates a baking tray according to one embodiment in a perspective view,
- FIG 3: illustrates a cross-sectional view of the baking tray according to a first embodiment of the invention in detail,
- FIG 4: illustrates a cross-sectional view of the baking tray according to a second embodiment of the invention in detail,
- FIG 5: illustrates a cross-sectional view of the coating according to an embodiment of the invention in detail.

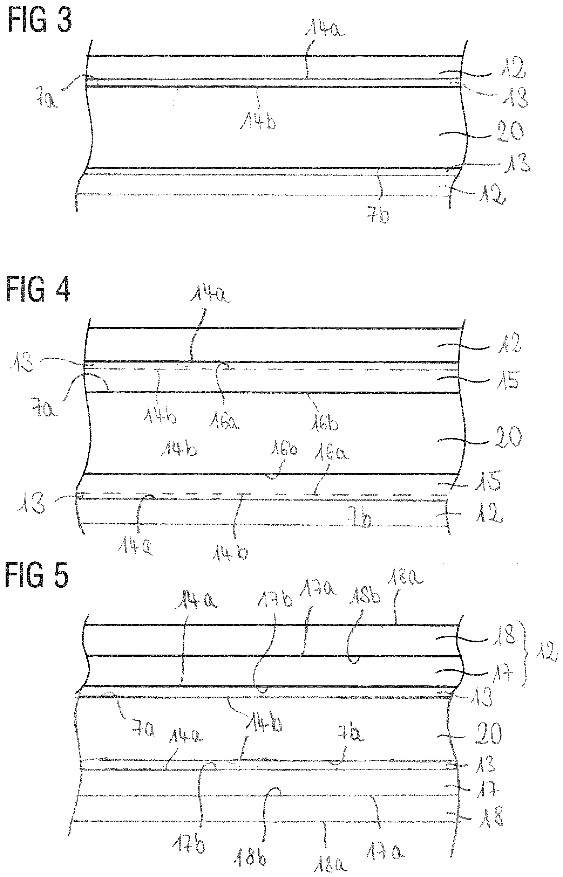

The embodiments of figures 3 and 5 are not forming part of the claimed invention but help to understand the invention. Only the embodiment of figure 4 is according to the invention.

### DETAILED DESCRIPTION

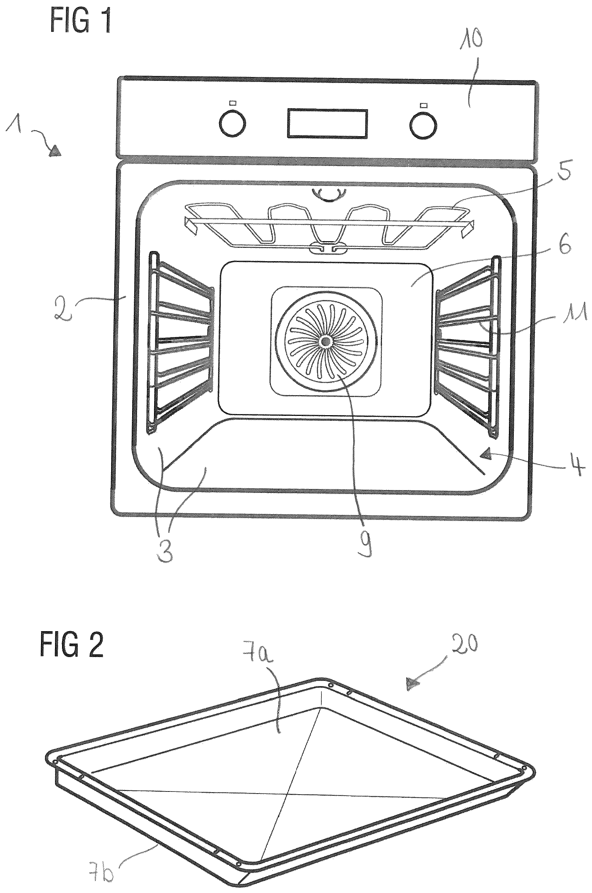

FIG 1 illustrates a schematic view of a cooking appliance 1. Such cooking appliance 1 comprises a heatable cavity 2 having cavity walls 3 which define a cooking chamber 4 into which foodstuff may be placed for cooking or baking. The cooking chamber 4 is defined by the cavity walls 3, usually comprising a left and a right side wall, a bottom wall and an upper wall as well as a rear wall and a front wall. One of the cavity walls 3, usually the front wall (not shown in FIG 1) comprises a central opening for placing the foodstuff into the cooking chamber 4. The central opening may be closed or opened by a door (not shown in FIG 1) that may be a part of the front wall. The cooking appliance 1 usually further comprises also heating elements 5 presently disposed at the upper cavity wall of the cavity 2 for heating the cooking chamber 4 and therefore heating food that has been placed therein to be cooked. The cooking appliance 1 further comprises a fan cover 6 being disposed at the rear cavity wall of the cavity 2 in front of a fan 9 of the cooking appliance 1. The fan cover 6 is essentially plate shaped and comprises openings 8 for allowing a fluid to flow through. The fan cover 6 might for example be attached to the rear cavity wall by screws.

The cooking appliance 1 further comprises a control panel 10 with several operating and display elements, e.g. temperature display or oven setting knobs. Furthermore, mounting grids and shelves 11 are disposed at a left and a right cavity wall 3.

A baking tray 20 can be mounted on said mounting grids and shelves 11 for inserting foodstuff into the oven cavity 2. The baking tray 20 can be made of a corrosive material, in particular corrosive steel, or an non-corrosive material, in particular stainless steel or aluminium. An exemplary embodiment of the invention in form of a baking tray 20 is shown in FIG 2. The baking tray 20 comprises an upper surface 7a and a bottom surface 7b. Of course, the baking tray 20 may have other shapes of different design than shown in FIG 2, or may be designed as a grid or may further include openings ("air-fry grids") as well as designed like further well-known variants of baking trays.

FIG 3 shows a cross-sectional view of the baking tray 20 according to a first embodiment in which the layer structure can be seen. This embodiment does not form part of the claimed invention. baking tray 20 is obtained by a process wherein the entire surface, thus the upper surface 7a and the bottom surface 7b of the baking tray 20 is pretreated by an enamelling process to form a ground layer 13 formed by a ground coat composition that has burned to the baking tray 20 at temperatures of about 820°C on said surface 7a, 7b. In general, the temperature for enamelling a ground enamel may be between 680 and 820°C, depending of the specific formulation of the ground enamel. In other words: The entire baking tray 20 is surrounded by the ground layer 13. Said ground layer 13 or, respectively, enamel layer, has an outer surface 14a facing away from the baking tray 20 and an inner surface 14b facing towards the baking tray 20 and shows a surface roughness Ra of about 2 to 3.5µm at its upper surface 14a. The thickness of the ground layer 13 is about 20µm. Ground layer 13 also shows corrosion resistant properties so that the baking tray 20 is protected against corrosion, what is in particular useful and necessary if said baking tray 20 is made of a corrosive material, for example a low carbon steel to save costs. Inventors have surprisingly found that such a small thickness and small roughness shows good adhesion properties that are sufficient for applying a non-stick and/or non-wetting coating 12 comprising at least one layer 17 that is obtained by a sol-gel process from a first composition comprising a silica sol and a silane and according to embodiments of the invention further components like solvents or additives in useful amounts as described before.

FIG 4 shows a cross-sectional view of the baking tray 20 according to the invention in which the layer structure can be seen. The baking tray 20 is presently made from a corrosive material so that a protective layer 15 is applied to the entire surface, thus the upper surface 7a and the lower surface 7b of the baking tray 20 before the pretreatment step for preventing the baking tray 20 from corrosion, the protective layer 15 having an outer surface 16a facing away from the baking tray 20 and an inner surface 16b facing towards the baking tray 20. Afterwards, for obtaining a baking tray 20 with a non-stick and/or non-wetting coating 12, said protective layer 15 is pretreated by sandblasting or laser treatment to achieve a surface roughness of the surface 16a of the protective layer between about 2 and 3.5µm by sandblasting or a surface roughness smaller than 1µm by laser treatment. Inventors have surprisingly found out that even though the surface roughness achieved by laser treatment is smaller, good adhesion behaviour can be achieved, probably due to more fine-grained structure in comparison with a sandblasted surface. The protection layer 15 has a layer thickness of about 150µm. In particular in case that the protection layer 15 is an aluminium layer or a layer comprising aluminium, it might be useful to carry out an enamelling process to form a ground coat 13 on the surface 16a of the protective layer 15 (shown in dashed lines) to benefit from the good adhesive properties of an enamel layer made from a ground composition having a surface roughness between 2 to 3.5µm.

FIG 5 shows a cross-sectional view of the baking tray 20 according to a further embodiment, that differs from the first embodiment according to FIG 3 in that the non-stick and/or non-wetting coating 12 comprises a first and a second layer 17, 18, wherein the first layer 17 is applied to the surface 14a of the ground layer 13 and wherein the second layer 18 is applied to the first layer 17. This embodiment of fig. 5 does not form part of the claimed invention.

The second layer 18 is obtained by a sol-gel process from a second composition comprising a silica sol, a silane and a siloxane. Both layers 17, 18 have an outer surface 17a, 18a facing away from the baking tray 20 and an inner surface 17b, 18b facing towards the baking tray 20.

As a matter of course, even a baking tray 20 according to the invention shown in FIG 4 might have a non-stick and/or non-wetting coating 12 comprising a first and a second layer 17, 18, wherein the first layer 17 is applied to the surface 16a of the protective layer 15 and wherein the second layer 18 is applied to the first layer 17.

Both, the first layer 17 and, if present, the second layer 18 are obtained by a sol-gel process. For production of the first layer 17, a colloidal silica sol, which is pure SiO₂, an organoalkoxysilane, which is an organic-inorganic hybrid material and presently methyltrimethyoxysilane, and an acid catalyst, presently acetic acid are mixed and stirred for about 2 hours at room temperature in order to effect a condensation reaction. The weight proportion of organoalkoxysilane is about 10 to 40wt%, silica sol is present in an amount of 30 to 70wt%. Adding acetic acid in an amount of 0,1 to 2 wt% is sufficient for accelerating the condensation reaction.

Then, a solvent, presently propanol, is added in an amount of 10 to 40wt%. Pigments are added and further additives can be additionally added at this step.

For production of the second layer 18, colloidal silica sol, siloxane and a solvent, even here propanol, are mixed. Organoalkoxysilane and an acid catalyst, presently acetic acid are then added. Even said mixture is mixed and stirred for about 2 hours at room temperature. The weight proportion of organoalkoxysilane is about 10 to 40wt%, silica sol is present in an amount of 30 to 70wt%, acetic acid is present in an amount of 0,1 to 2wt%. Siloxane, presently polydimethylsiloxane, is added in an amount of 0,1 to 2 wt%.

Then, a solvent, presently even here propanol, is added in an amount of 10 to 40wt%. Pigments are added and further additives can be additionally added at this step.

For manufacturing a baking tray 20 having a non-stick and/or non-wetting coating 12 on its surface 7a, 7b a baking tray 20 having an upper surface 7a, an bottom surface 7b is provided. In a further step, the surface 7a, 7b of the baking tray 20 is pre-treated in order to provide good adhesion properties and surface roughness for subsequent apply of the non-stick and/or non-wetting coating 12 (FIG 3). Additionally or in an alternative, a protective layer 15 is applied to the surface 7a, 7b of the baking tray 20 and said protective layer 15 is pretreated (FIG 4). Pretreatment of the surface 7a, 7b of the baking tray 20 or, if present, the surface 16a, 16b of the protective layer 15 is carried out in particular by sandblasting, laser treatment or an enamelling process for forming a ground layer 13.

The enamelling process is in particular carried out by applying an enamel powder onto the upper surface 7a of the baking tray 20 and/or onto the surface 16a, 16b of the protective layer 15, and heating the enamel powder for providing a ground layer 13 with a surface 14a having a roughness being suitable for applying the non-stick and/or non-wetting coating 12.

Afterwards, at least one layer of the non-stick and/or non-wetting coating 12 is applied to the upper surface 7a of the baking tray 20 or, if present, to the upper surface 16a of the protective layer 15 or the surface 14a of the ground layer 13.

In case of applying a non-stick and/or non-wetting coating 12 comprising at least two layers 17, 18 (FIG 5), the first layer 17 is applied to the surface 7a, 7b of the baking tray 20 or the surface 14a of the ground layer 13 or the surface 16a of the protective layer 15, and the second layer 18 is applied to the first layer 17.

The present invention, thus a baking tray 20 having a non-stick and/or non-wetting coating 12 and a baking tray 20 having such a coating 12 shows an improved cleaning behaviour. The coating 12 is abrasion-resistant and shows a greater surface hardness what leads to an increased lifetime. Furthermore, the coating 12 has shown a good adhesion properties on the baking tray 20, in particular on the surface 14a of the ground layer 13 or the surface 16a of the protective layer 15. As the coating 12 is produced by a sol-gel process, a (second) burning step at high temperatures is not necessary.

The baking tray 20 may further comprise a printing (not shown) that is applied, in particular by ink technology, to the surface of the coating 12, in particular to a surface area that has been activated by using plasma technology in order to increase the surface tension.

Although illustrative embodiments of the present invention have been described herein with reference to the accompanying drawings, it is to be understood that the present invention is not limited to those precise embodiments, and that various other changes and modifications may be affected therein by one skilled in the art without departing from the scope of the invention. All such changes and modifications are intended to be included within the scope of the invention as defined by the appended claims.

### List of reference numerals

- 1: cooking appliance
- 2: cavity
- 3: cavity wall
- 4: cooking chamber
- 5: heating element
- 6: fan cover
- 7a: upper surface of the baking tray
- 7b: bottom surface of the baking tray
- 8: openings
- 9: fan
- 10: control panel
- 11: mounting grids and shelves
- 12: non-stick and/or non-wetting coating
- 13: ground layer
- 14a: surface of the ground layer
- 14b: bottom surface of the ground layer
- 15: protective layer
- 16a: inner surface of the protective layer
- 16b: outer surface of the protective layer
- 17: first layer of the non-stick and/or non-wetting coating
- 17a: inner surface of the first layer
- 17b: outer surface of the first layer
- 18: second layer of the non-stick and/or non-wetting coating
- 18a: outer surface of the second layer
- 18b: inner surface of the second layer
- 20: baking tray

## Claims

1. A baking tray (20) or baking grid, in particular a baking tray (20) for a cooking appliance (1), having a non-stick and/or non-wetting coating (12) obtainable by a process **characterised by** the following steps,
a) providing a baking tray (20) or baking grid having a surface, in particular an upper surface (7a) and an bottom surface (7b),
b) applying the non-stick and/or non-wetting coating (12) to a pretreated surface (16a) of the baking tray (20) or baking grid, wherein the non-stick and/or non-wetting coating (12) comprises at least one layer (17) that is obtained by a sol-gel process from a first composition comprising a silica sol and a silane;
**characterized in that** the baking tray (20) or baking grid is provided with a protective layer (15) that is at least partially, in particular completely, applied to the surface (7a, 7b) of the baking tray (20), said protective layer (15) is pretreated by sandblasting and/or laser treatment and/or an enamelling process for providing the pre-treated surface (16a) having a roughness being suitable for applying the non-stick and/or non-wetting coating (12) and the at least one layer (17) of the non-stick and/or non-wetting coating (12) is applied to the pre-treated surface (16a) of said protective layer (15).

2. The baking tray (20) or baking grid according to claim 1, **characterised in that**
the baking tray (20) or baking grid is made of a corrosive material, in particular corrosive steel.

3. The baking tray (20) or baking grid according to claim 1 or 2,
**characterised in that**
the protective layer (15) is an enamel layer and/or an aluminium layer and/or a layer comprising aluminium.

4. The baking tray (20) or baking grid according to any of claims 1 to 3,
**characterised in that**
the protective layer (15) has a thickness between 50 and 250µm, in particular between 100 and 200µm.

5. The baking tray (20) or baking grid according to any one of the preceding claims,
**characterised in that**
the pretreated surface (16a) the protective layer (15) has a surface roughness between Ra 0.01 µm to 10.00 µm, more preferably between Ra 0.10 µm to 5.00 µm, still more preferably between Ra 0.20 µm to 5.00 µm, still more preferably between Ra 0.50 µm to 5.00 µm, still more preferably between Ra 2.00 µm to 5.00 µm, still more preferably between Ra 2.50 µm to 5.00 µm.

6. The baking tray (20) or baking grid according to any of the preceding claims,
**characterised in that**
the non-stick and/or non-wetting coating (12) comprises at least a first and a second layer (17, 18), wherein the first layer (17) is applied to the pre-treated surface (16a) of the protective layer (15) and wherein the second layer (18) is applied to the first layer (17).

7. The baking tray (20) or baking grid according to claim 6, **characterised in that**
the second layer (18) is obtained by a sol-gel process from a second composition comprising a silica sol, a silane and a siloxane.

8. The baking tray (20) or baking grid according to any of the preceding claims,
**characterised in that**
the silica sol is present in an amount of 15 to 70 wt%, in particular in an amount of 30 to 70 wt% and/or the silane is present in an amount of 2 to 70 wt%, in particular in an amount of 10 to 40 wt%, within the first and/or second composition.

9. The baking tray (20) or baking grid according to any of the preceding claims,
**characterised in that**
the silane is an organoalkoxysilane, in particular a methyltrimethyoxysilane and/or a fluoralkoxysilane.

10. The baking tray (20) or baking grid according to any of the preceding claims,
**characterised in that**
the first composition and/or the second composition comprise or comprises a solvent, in particular an organic solvent, and/or a catalyst, in particular an acidic catalyst, more preferably an organic compound containing one or more carboxyl groups and/or a mineral acid.

11. The baking tray (20) or baking grid according to claim 12, **characterised in that**
the solvent is present in an amount of 10 to 60wt%, in particular in an amount of 10 to 40 wt% and/or the catalyst is present in an amount of 0,1 to 5 wt%, in particular in an amount of 0,1 to 2 wt%.

12. The baking tray (20) or baking grid according to any of the preceding claims,
**characterised in that**
the first composition comprises a siloxane, in particular a polydimethylsiloxane.

13. The baking tray (20) or baking grid according to claims 7 to 12,
**characterised in that**
the siloxane is present in an amount of 0,1 to 2wt%.

14. The baking tray (20) or baking grid according to any one of the preceding claims,
**characterised in that**
the of the first composition and/or the second composition comprise or comprises pigments and/or dyes and/or filling materials and/or further additives.

15. The baking tray (20) or baking grid according to any one of the preceding claims,
**characterized in that**
at least a part of the outer surface of the coating (12) provides an activated surface area, in particular being activated by an activation process that increases the surface tension within the activated surface area, more particular activated by an activation process using plasma technology, and wherein a printing is applied to the activated surface area, in particular by means of ink technology.

16. A cooking appliance (1), in particular a domestic oven comprising
- a heatable cavity (2), comprising at least one cavity wall (3) defining a cooking chamber (4) for cooking foodstuff and a central opening for placing foodstuff into the cooking chamber (4),
- heating elements (5) for heating said cavity (2),
- a door for closing the cavity (2), in particular for closing the central opening of the cavity (3),
- mounting grids and/or shelves (11) being disposed at a left and a right cavity wall (3) for positioning a baking tray (20) or baking grid within the cooking chamber (4), **characterised in that**
the cooking appliance (1) comprises a baking tray (20) or baking grid according to any one of the claims 1 to 16, wherein the baking tray (20) is mounted or can be mounted on mounting grids and/or shelves (11).

17. A method for manufacturing a baking tray (20) or baking grid, in particular a baking tray (20) or baking grid of a cooking appliance (1), having a non-stick and/or non-wetting coating (12) on a surface (7a, 7b) **characterised by** at least the following steps:
- providing a baking tray (20) or baking grid having a surface, in particular an upper surface (7a) and a bottom surface (7b),
applying a protective layer (15), in particular an enamel layer and/or an aluminium layer and/or a layer comprising aluminium, to the surface (7a, 7b) of the baking tray (20) at least partially, in particular completely, and pretreating the surface (16a) of the protective layer (15) by sandblasting and/or laser treatment and/or an enamelling process to form a ground layer (13),
- applying at least one layer (17) of the non-stick and/or non-wetting coating (12) to the pretreated surface of the protective layer (15).

18. A method for manufacturing a baking tray (20) or baking grid according to any of the claims 17,
**characterised in**
applying an enamel powder onto the surface (16a) of the protective layer (15), and heating the enamel powder for providing a ground layer (13) with a surface (14a) having a roughness being suitable for applying the non-stick and/or non-wetting coating.

19. A method for manufacturing a baking tray (20) or baking grid according to claim 17 or 18,
**characterised in that**
the non-stick and/or non-wetting coating comprises a first and a second layer (17, 18), wherein the first layer (17) is applied to the surface (16a) of the protective layer (15), and wherein the second layer (18) is applied to the first layer (17).

20. A method for manufacturing a baking tray (20) or baking grid according to any of claim 17 to 19,
**characterized in** further comprising the following steps,
- performing an activation process on at least a part of the outer surface of the coating (12) in order to provide an activated surface area, wherein the activation process in particular increases the surface tension within the activated surface area, in particular performing an activation process by using plasma technology,
- applying a printing to the activated surface area, in particular by means of ink technology.

## Patentansprüche

1. Backblech (20) oder Backrost, insbesondere Backblech (20) für ein Gargerät (1), mit einer Antihaft- und/oder Antibenetzungsbeschichtung (12), erhältlich durch ein Verfahren, das durch die folgenden Schritte gekennzeichnet ist,
a) Bereitstellen eines Backblechs (20) oder Backrosts mit einer Oberfläche, insbesondere einer oberen Oberfläche (7a) und einer unteren Oberfläche (7b),
b) Aufbringen der Antihaft- und/oder Antibenetzungsbeschichtung (12) auf eine vorbehandelte Oberfläche (16a) des Backblechs (20) oder Backrosts, wobei die Antihaft- und/oder Antibenetzungsbeschichtung (12) mindestens eine durch ein Sol-Gel-Verfahren aus einer ersten Zusammensetzung, die ein Kieselsol und ein Silan umfasst, erhaltene Schicht (17) umfasst;
**dadurch gekennzeichnet, dass**
das Backblech (20) oder der Backrost mit einer Schutzschicht (15) versehen wird, die zumindest teilweise, insbesondere vollständig, auf die Oberfläche (7a, 7b) des Backblechs (20) aufgebracht wird, die Schutzschicht (15) durch Sandstrahlen und/oder Laserbehandlung und/oder ein Emaillierverfahren vorbehandelt wird, um die vorbehandelte Oberfläche (16a) mit einer zum Aufbringen der Antihaft- und/oder Antibenetzungsbeschichtung (12) geeigneten Rauhigkeit bereitzustellen, und die mindestens eine Schicht (17) der Antihaft- und/oder Antibenetzungsbeschichtung (12) auf die vorbehandelte Oberfläche (16a) der Schutzschicht (15) aufgebracht wird.

2. Backblech (20) oder Backrost nach Anspruch 1, **dadurch gekennzeichnet, dass**
das Backblech (20) oder der Backrost aus einem korrosiven Material, insbesondere korrosivem Stahl, besteht.

3. Backblech (20) oder Backrost nach Anspruch 1 oder 2,
**dadurch gekennzeichnet, dass**
es sich bei der Schutzschicht (15) um eine Emailleschicht und/oder eine Aluminiumschicht und/oder eine Aluminium umfassende Schicht handelt.

4. Backblech (20) oder Backrost nach einem der Ansprüche 1 bis 3,
**dadurch gekennzeichnet, dass**
die Schutzschicht (15) eine Dicke zwischen 50 und 250 µm, insbesondere zwischen 100 und 200 µm, aufweist.

5. Backblech (20) oder Backrost nach einem der vorhergehenden Ansprüche,
**dadurch gekennzeichnet, dass**
die vorbehandelte Oberfläche (16a) der Schutzschicht (15) eine Oberflächenrauhigkeit zwischen Ra 0,01 µm bis 10,00 µm, weiter bevorzugt zwischen Ra 0,10 µm bis 5,00 µm, noch weiter bevorzugt zwischen Ra 0,20 µm bis 5,00 µm, noch weiter bevorzugt zwischen Ra 0,50 µm bis 5,00 µm, noch weiter bevorzugt zwischen Ra 2,00 µm bis 5,00 µm, noch weiter bevorzugt zwischen Ra 2,50 µm bis 5,00 µm, aufweist.

6. Backblech (20) oder Backrost nach einem der vorhergehenden Ansprüche,
**dadurch gekennzeichnet, dass**
die Antihaft- und/oder Antibenetzungsbeschichtung (12) mindestens eine erste und eine zweite Schicht (17, 18) umfasst, wobei die erste Schicht (17) auf die vorbehandelte Oberfläche (16a) der Schutzschicht (15) aufgebracht ist und wobei die zweite Schicht (18) auf die erste Schicht (17) aufgebracht ist.

7. Backblech (20) oder Backrost nach Anspruch 6, **dadurch gekennzeichnet, dass**
die zweite Schicht (18) durch ein Sol-Gel-Verfahren aus einer zweiten Zusammensetzung, die ein Kieselsol, ein Silan und ein Siloxan umfasst, erhalten wird.

8. Backblech (20) oder Backrost nach einem der vorhergehenden Ansprüche,
**dadurch gekennzeichnet, dass**
in der ersten und/oder zweiten Zusammensetzung das Kieselsol in einer Menge von 15 bis 70 Gew.-%, insbesondere in einer Menge von 30 bis 70 Gew.-%, vorliegt und/oder das Silan in einer Menge von 2 bis 70 Gew.-%, insbesondere in einer Menge von 10 bis 40 Gew.- %, vorliegt.

9. Backblech (20) oder Backrost nach einem der vorhergehenden Ansprüche,
**dadurch gekennzeichnet, dass**
es sich bei dem Silan um ein Organoalkoxysilan, insbesondere ein Methyltrimethyoxysilan, und/oder ein Fluoralkoxysilan handelt.

10. Backblech (20) oder Backrost nach einem der vorhergehenden Ansprüche,
**dadurch gekennzeichnet, dass**
die erste Zusammensetzung und/oder die zweite Zusammensetzung ein Lösungsmittel, insbesondere ein organisches Lösungsmittel, und/oder einen Katalysator, insbesondere einen sauren Katalysator, weiter bevorzugt eine organische Verbindung mit einer oder mehreren Carboxylgruppen und/oder eine Mineralsäure, umfassen bzw. umfasst.

11. Backblech (20) oder Backrost nach Anspruch 12,
**dadurch gekennzeichnet, dass**
das Lösungsmittel in einer Menge von 10 bis 60 Gew.-%, insbesondere in einer Menge von 10 bis 40 Gew.-%, vorliegt und/oder der Katalysator in einer Menge von 0,1 bis 5 Gew.-%, insbesondere in einer Menge von 0,1 bis 2 Gew.-%, vorliegt.

12. Backblech (20) oder Backrost nach einem der vorhergehenden Ansprüche,
**dadurch gekennzeichnet, dass**
die erste Zusammensetzung ein Siloxan, insbesondere ein Polydimethylsiloxan, umfasst.

13. Backblech (20) oder Backrost nach den Ansprüchen 7 bis 12,
**dadurch gekennzeichnet, dass**
das Siloxan in einer Menge von 0,1 bis 2 Gew.-% vorliegt.

14. Backblech (20) oder Backrost nach einem der vorhergehenden Ansprüche,
**dadurch gekennzeichnet, dass**
die erste Zusammensetzung und/oder die zweite Zusammensetzung Pigmente und/oder Farbstoffe und/oder Füllstoffe und/oder weitere Zusatzstoffe umfassen bzw. umfasst.

15. Backblech (20) oder Backrost nach einem der vorhergehenden Ansprüche,
**dadurch gekennzeichnet, dass**
zumindest ein Teil der Außenfläche der Beschichtung (12) eine aktivierte Oberfläche, bereitstellt, die insbesondere durch ein Aktivierungsverfahren aktiviert wird, das die Oberflächenspannung in der aktivierten Oberfläche erhöht, die insbesondere durch ein Aktivierungsverfahren unter Verwendung von Plasmatechnik aktiviert wird, und wobei ein Aufdruck auf die aktivierte Oberfläche aufgebracht wird, insbesondere mittels Tintentechnik.

16. Gargerät (1), insbesondere Haushaltsofen, umfassend
- einen beheizbaren Hohlraum (2), der mindestens eine Hohlraumwand (3) umfasst, die einen Garraum (4) zum Garen von Lebensmitteln und eine zentrale Öffnung zum Einbringen von Lebensmitteln in den Garraum (4) definiert,
- Heizelemente (5) zum Erhitzen des Hohlraums (2),
- eine Tür zum Verschließen des Hohlraums (2), insbesondere zum Verschließen der zentralen Öffnung des Hohlraums (3),
- Befestigungsgitter und/oder Ablagen (11), die an einer linken und einer rechten Hohlraumwand (3) angeordnet sind, zur Positionierung eines Backblechs (20) oder Backrosts in dem Garraum (4);
**dadurch gekennzeichnet, dass**
das Gargerät (1) ein Backblech (20) oder einen Backrost nach einem der Ansprüche 1 bis 16 umfasst,
wobei das Backblech (20) an Befestigungsgittern und/oder Ablagen (11) befestigt ist oder befestigt werden kann.

17. Verfahren zur Herstellung eines Backblechs (20) oder Backrosts, insbesondere eines Backblechs (20) oder Backrosts eines Gargeräts (1), mit einer Antihaft- und/oder Antibenetzungsbeschichtung (12) auf einer Oberfläche (7a, 7b), das durch mindestens die folgenden Schritte gekennzeichnet ist:
- Bereitstellen eines Backblechs (20) oder Backrosts mit einer Oberfläche, insbesondere einer oberen Oberfläche (7a) und einer unteren Oberfläche (7b), zumindest teilweises, insbesondere vollständiges, Aufbringen einer Schutzschicht (15), insbesondere einer Emailleschicht und/oder einer Aluminiumschicht und/oder einer Aluminium umfassenden Schicht, auf die Oberfläche (7a, 7b) des Backblechs (20) und Vorbehandeln der Oberfläche (16a) der Schutzschicht (15) durch Sandstrahlen und/oder Laserbehandlung und/oder ein Emaillierverfahren zur Bildung einer Grundschicht (13),
- Aufbringen mindestens einer Schicht (17) der Antihaft- und/oder Antibenetzungsbeschichtung (12) auf die vorbehandelte Oberfläche der Schutzschicht (15).

18. Verfahren zum Herstellen eines Backblechs (20) oder Backrosts nach einem der Ansprüche 17,
**gekennzeichnet durch**
Aufbringen eines Emaillepulvers auf die Oberfläche (16a) der Schutzschicht (15) und Erhitzen des Emaillepulvers zum Bereitstellen einer Grundschicht (13) mit einer Oberfläche (14a) mit einer zum Aufbringen der Antihaft- und/oder Antibenetzungsbeschichtung geeigneten Rauhigkeit.

19. Verfahren zum Herstellen eines Backblechs (20) oder Backrosts nach Anspruch 17 oder 18,
**dadurch gekennzeichnet, dass**
die Antihaft- und/oder Antibenetzungsbeschichtung eine erste und eine zweite Schicht (17, 18) umfasst, wobei die erste Schicht (17) auf die Oberfläche (16a) der Schutzschicht (15) aufgebracht ist und wobei die zweite Schicht (18) auf die erste Schicht (17) aufgebracht ist.

20. Verfahren zum Herstellen eines Backblechs (20) oder Backrosts nach einem der Ansprüche 17 bis 19,
**dadurch gekennzeichnet, dass** es ferner die folgenden Schritte umfasst,
- Durchführen eines Aktivierungsverfahrens an mindestens einem Teil der äußeren Oberfläche der Beschichtung (12) zur Bereitstellung einer aktivierten Oberfläche, wobei das Aktivierungsverfahren insbesondere die Oberflächenspannung in der aktivierten Oberfläche erhöht, insbesondere Durchführen eines Aktivierungsverfahrens unter Verwendung von Plasmatechnik,
- Aufbringen eines Aufdrucks auf die aktivierte Oberfläche, insbesondere mittels Tintentechnik.

## Revendications

1. Plaque de cuisson (20) ou grille de cuisson, en particulier plaque de cuisson (20) pour un appareil de cuisson (1), comportant un revêtement antiadhésif et/ou non mouillant (12) pouvant être obtenu par un procédé **caractérisé par** les étapes suivantes,
a) fourniture d'une plaque de cuisson (20) ou d'une grille de cuisson ayant une surface, en particulier une surface supérieure (7a) et une surface inférieure (7b),
b) application du revêtement antiadhésif et/ou non mouillant (12) sur une surface prétraitée (16a) de la plaque de cuisson (20) ou de la grille de cuisson, le revêtement antiadhésif et/ou non mouillant (12) comprenant au moins une couche (17) obtenue par un procédé solgel à partir d'une première composition comprenant un sol de silice et un silane ;
**caractérisée en ce que**
la plaque de cuisson (20) ou la grille de cuisson est munie d'une couche de protection (15) qui est appliquée au moins en partie, en particulier complètement, sur la surface (7a, 7b) de la plaque de cuisson (20), ladite couche de protection (15) est prétraitée par sablage et/ou traitement laser et/ou par un procédé d'émaillage permettant d'obtenir une surface prétraitée (16a) présentant une rugosité adaptée pour l'application du revêtement antiadhésif et/ou non mouillant (12), et l'au moins une couche (17) du revêtement antiadhésif et/ou non mouillant (12) est appliquée sur la surface prétraitée (16a) de ladite couche de protection (15).

2. Plaque de cuisson (20) ou grille de cuisson selon la revendication 1,
**caractérisée en ce que**
la plaque de cuisson (20) ou la grille de cuisson est faite d'un matériau corrosif, en particulier d'acier corrosif.

3. Plaque de cuisson (20) ou grille de cuisson selon la revendication 1 ou 2,
**caractérisée en ce que**
la couche de protection (15) est une couche d'émail et/ou une couche d'aluminium et/ou une couche comprenant de l'aluminium.

4. Plaque de cuisson (20) ou grille de cuisson selon l'une quelconque des revendications 1 à 3, **caractérisée en ce que**
la couche de protection (15) a une épaisseur comprise entre 50 et 250 µm, en particulier entre 100 et 200 µm.

5. Plaque de cuisson (20) ou grille de cuisson selon l'une quelconque des revendications précédentes, **caractérisée en ce que**
la surface prétraitée (16a) de la couche de protection (15) présente une rugosité de surface comprise entre Ra 0,01 µm et 10,00 µm, plus préférentiellement entre Ra 0,10 µm et 5,00 µm, encore plus préférentiellement entre Ra 0,20 µm et 5,00 µm, encore plus préférentiellement entre Ra 0,50 µm et 5,00 µm, encore plus préférentiellement entre Ra 2,00 µm et 5,00 µm, encore plus préférentiellement entre Ra 2,50 µm et 5,00 µm.

6. Plaque de cuisson (20) ou grille de cuisson selon l'une quelconque des revendications précédentes, **caractérisée en ce que**
le revêtement antiadhésif et/ou non mouillant (12) comprend au moins une première et une deuxième couche (17, 18), la première couche (17) étant appliquée sur la surface prétraitée (16a) de la couche de protection (15) et la deuxième couche (18) étant appliquée sur la première couche (17).

7. Plaque de cuisson (20) ou grille de cuisson selon la revendication 6,
**caractérisée en ce que**
la deuxième couche (18) est obtenue par un procédé sol-gel à partir d'une deuxième composition comprenant un sol de silice, un silane et un siloxane.

8. Plaque de cuisson (20) ou grille de cuisson selon l'une quelconque des revendications précédentes, **caractérisée en ce que**
le sol de silice est présent en une quantité de 15 à 70 % en poids, en particulier en une quantité de 30 à 70 % en poids et/ou le silane est présent en une quantité de 2 à 70 % en poids, en particulier en une quantité de 10 à 40 % en poids, dans la première et/ou la deuxième composition.

9. Plaque de cuisson (20) ou grille de cuisson selon l'une quelconque des revendications précédentes, **caractérisée en ce que**
le silane est un organoalcoxysilane, en particulier un méthyl-triméthoxysilane et/ou un fluoroalcoxysilane.

10. Plaque de cuisson (20) ou grille de cuisson selon l'une quelconque des revendications précédentes, **caractérisée en ce que**
la première composition et/ou la deuxième composition comprennent ou comprend un solvant, en particulier un solvant organique et/ou un catalyseur, en particulier un catalyseur acide, plus préférentiellement un composé organique contenant un ou plusieurs groupes carboxyle et/ou un acide minéral.

11. Plaque de cuisson (20) ou grille de cuisson selon la revendication 12,
**caractérisée en ce que**
le solvant est présent en une quantité de 10 à 60 % en poids, en particulier en une quantité de 10 à 40 % en poids et/ou le catalyseur est présent en une quantité de 0,1 à 5 % en poids, en particulier en une quantité de 0,1 à 2 % en poids.

12. Plaque de cuisson (20) ou grille de cuisson selon l'une quelconque des revendications précédentes, **caractérisée en ce que**
la première composition comprend un siloxane, en particulier un polydiméthylsiloxane.

13. Plaque de cuisson (20) ou grille de cuisson selon les revendications 7 à 12,
**caractérisée en ce que**
le siloxane est présent en une quantité de 0,1 à 2 % en poids.

14. Plaque de cuisson (20) ou grille de cuisson selon l'une quelconque des revendications précédentes, **caractérisée en ce que**
la première composition et/ou la deuxième composition comprennent ou comprend des pigments et/ou des colorants et/ou matériaux de remplissage et/ou d'autres additifs.

15. Plaque de cuisson (20) ou grille de cuisson selon l'une quelconque des revendications précédentes, **caractérisée en ce que**
au moins une partie de la surface extérieure du revêtement (12) fournit une zone de surface activée, en particulier activée par un processus d'activation qui augmente la tension de surface dans la zone de surface activée, plus particulièrement activée par un processus d'activation utilisant une technologie plasma, et dans laquelle une impression est appliquée sur la zone de surface activée, en particulier au moyen d'une technologie d'encre.

16. Appareil de cuisson (1), en particulier un four domestique comprenant
- une cavité chauffable (2), comprenant au moins une paroi de cavité (3) définissant une enceinte de cuisson (4) pour cuire un produit alimentaire et une ouverture centrale pour placer un produit alimentaire dans l'enceinte de cuisson (4),
- des éléments chauffants (5) pour chauffer ladite cavité (2),
- une porte pour fermer la cavité (2), en particulier pour fermer l'ouverture centrale de la cavité (3),
- des grilles et/ou étagères de montage (11) qui sont disposées au niveau d'une paroi de cavité gauche et d'une paroi de cavité droite (3) pour positionner une plaque de cuisson (20) ou une grille de cuisson à l'intérieur de l'enceinte de cuisson (4),
**caractérisée en ce que**
l'appareil de cuisson (1) comprend une plaque de cuisson (20) ou une grille de cuisson selon l'une quelconque des revendications 1 à 16,
dans lequel la plaque de cuisson (20) est montée ou peut être montée sur des grilles et/ou des étagères de montage (11).

17. Procédé de fabrication d'une plaque de cuisson (20) ou d'une grille de cuisson, en particulier d'une plaque de cuisson (20) ou d'une grille de cuisson d'un appareil de cuisson (1), présentant un revêtement antiadhésif et/ou non mouillant (12) sur une surface (7a, 7b), **caractérisé par** au moins les étapes suivantes :
- fourniture d'une plaque de cuisson (20) ou d'une grille de cuisson ayant une surface, notamment une surface supérieure (7a) et une surface inférieure (7b), application d'une couche de protection (15), notamment une couche d'émail et/ou une couche d'aluminium et/ou une couche comprenant de l'aluminium, sur la surface (7a, 7b) de la plaque de cuisson (20) au moins partiellement, en particulier complètement, et prétraitement de la surface (16a) de la couche de protection (15) par sablage et/ou traitement laser et/ou un procédé d'émaillage pour former une couche de base (13),
- application d'au moins une couche (17) du revêtement antiadhésif et/ou non mouillant (12) sur la surface prétraitée de la couche de protection (15).

18. Procédé de fabrication d'une plaque de cuisson (20) ou d'une grille de cuisson selon l'une quelconque des revendications 17,
**caractérisé par**
l'application d'une poudre d'émail au-dessus de la surface (16a) de la couche de protection (15), et chauffage de la poudre d'émail pour former une couche de base (13) ayant une surface (14a) présentant une rugosité appropriée pour appliquer le revêtement anti-adhésif et/ou non mouillant.

19. Procédé de fabrication d'une plaque de cuisson (20) ou d'une grille de cuisson selon la revendication 17 ou 18,
**caractérisée en ce que**
le revêtement antiadhésif et/ou non mouillant comprend une première et une deuxième couche (17, 18), la première couche (17) étant appliquée sur la surface (16a) de la couche de protection (15), et la deuxième couche (18) étant appliquée sur la première couche (17).

20. Procédé de fabrication d'une plaque de cuisson (20) ou d'une grille de cuisson selon l'une quelconque des revendications 17 à 19,
**caractérisé en ce qu'**il comprend en outre les étapes suivantes,
- réalisation d'un processus d'activation sur au moins une partie de la surface extérieure du revêtement (12) afin de fournir une zone de surface activée, le procédé d'activation augmentant en particulier la tension de surface dans la zone de surface activée, en particulier réalisation d'un processus d'activation par utilisation d'une technologie plasma,
- application d'une impression sur la zone de surface activée, en particulier au moyen d'une technologie d'encre.
